# EUROPÄISCHE PATENTSCHRIFT

(11) **EP 1 124 662 B1**
(45) Veröffentlichungstag und Bekanntmachung des Hinweises auf die Patenterteilung: **06.08.2003**
(21) Anmeldenummer: 99971362.1
(22) Anmeldetag: 28.10.1999
(51) Int. Cl.: B23B 51/02, B23B 51/00

(54) **HARTMETALLSCHNEIDPLATTE FÜR DEN EINSATZ AN EINEM BOHRER**
HARD METAL DRILL BIT FOR USE ON A DRILL
PLAQUETTE DE COUPE EN METAL DUR DESTINEE ETRE UTILISEE SUR UN FORET

(30) Priorität: 30.10.1998 DE 29819388 U
(43) Veröffentlichungstag der Anmeldung: 22.08.2001
(73) Patentinhaber: Karl Eischeid Erfindertätigkeit GbR, bestehend aus Petra Bergfelder, Karin Clever, Gertrud Eischeid, 51766 Engelskirchen (DE)
(72) Erfinder: Eischeid, Karl, (DE)
(74) Vertreter: Draudt, Axel Hermann Christian, Dipl.-Ing.
(86) Internationale Anmeldenummer: EP9908195
(87) Internationale Veröffentlichungsnummer: WO00025967

(56) Entgegenhaltungen:
- EP-A- 0 761 927
- EP-A- 0 836 919
- DE-A- 19 734 094

## Beschreibung

Die Erfindung betrifft eine Hartmetallschneidplatte für den Einsatz an einem Bohrer, insbesondere an einem Stein- oder Betonbohrer, die eine durch die Drehachse des Bohrers verlaufende Bohrspitze, beidseitig abfallende, von jeweils einer Hauptspanfläche und einer Hauptfreifläche gebildet Hauptschneiden besitzt, wobei die Hauptfreifläche an der Hauptschneide einen Hauptfreiwinkel mit einer zur Drehachse des Bohrers senkrechten Ebene des Werkstücks bildet.

Eine Hartmetallschneidplatte dieser Art ist z. B. aus EP-A-0 761 927 bekannt.

Bekannt sind Hartmetallschneidplatten für Schlag- oder Hammerbohrer, die gerade abfallende Hauptspan- und Hauptfreiflächen, sowie Hauptschneiden besitzen. Die Bohrspitze wird durch eine Querschneide gebildet, die die Hauptschneiden verbindet. Nachteilig ist dabei, daß die Hartmetallschneidplatte in den äußeren Schneidbereichen auf Grund der großen Umfangsgeschwindigkeiten einem starken Verschleiß unterworfen ist. Hierdurch sind die Standzeiten des Bohrers verringert. Die wesentlichen Verschleißursachen sind hierbei einerseits die Reibung der Schneidplatte auf der Bearbeitungsfläche, die zu einem Festschweißen von Werkstoffteilchen auf der Spanfläche führen kann. Diese reißen ab und rauhen die Span- bzw. die Freifläche auf. Eine andere Verschleißursache ist die Diffusion, die auf grund der durch die Reibung entstehenden hohen Temperaturen zu einer Wanderung von Metallatomen des Schneidstoffes in den abfließenden Span führt und dadurch das Schneidmaterial schwächt, was zu Brüchen führen kann.

Aufgabe der vorliegenden Erfindung ist es, eine Hartmetallschneidplatte zu liefern, die eine hohe Schnitt- und Vorschubstärke, Biege- und Bruchfestigkeit sowie Verschleißfestigkeit insbesondere an den äußeren, durch große Umfangsgeschwindigkeiten belasteten Bereichen der Hartmetallschneidplatte aufweist.

Die Aufgabe wird dadurch gelöst, daß der an der Hauptschneide gebildete Hauptfreiwinkel mit zunehmenden Abstand von der Bohrspitze abnimmt.

Durch den mit zunehmendem Abstand von der Bohrspitze abnehmenden Hauptfreiwinkel erhält man eine Absicherung der Hauptschneiden gegen Verschleiß bzw. Abbrechen insbesondere an den Enden der Hartmetallschneidplatte. Dies ermöglicht eine längere Standzeit, das ist die Zeit des Werkzeugeingriffs bis zum Erreichen eines zulässigen Verschleißes. Stark belastet durch die hohen Umdrehungsgeschwindigkeiten und durch die damit verbundenen hohen Umfangsgeschwindigkeiten, werden insbesondere die äußeren Bereiche der Hauptschneiden. Durch die vorgeschlagene Vorrichtung können die Außenbereiche praktisch so lange schneidfähig gehalten werden, wie die Spitzenbereiche. Der Spitzenbereich der Hartmetallschneide ist im allgemeinen weniger belastet, weil die Umfangsgeschwindigkeit im mittleren Bereich und damit auch der Verschleiß geringer ist. Durch die vorgeschlagene Vorrichtung wird sowohl der Freiflächenverschleiß als auch der Spanflächenverschleiß und die Kantenabrundung im äußeren Bereich der Hauptschneiden vermindert. Eine gleichmäßiger Verschleiß über die gesamten Hauptschneiden gewährleistet eine vollständige Ausnutzung der Schneidbereiche und verbessert die Kosten-Nutzen-Bilanz. Die vorgeschlagene Form der Hauptfreifläche bzw. des Hauptfreiwinkels kann bereits im Sinterprozeß hergestellt werden und bedarf keiner nachbearbeitenden Behandlung. Für die Anwendungen beim Schlag- oder Hammerbohren ist der Spanwinkel vorzugsweise negativ und kann ebenfalls entlang der Hauptschneide dem Freiwinkel entsprechend verändert werden. Auf diese Weise kann entlang der Hauptschneide ein konstanter Keilwinkel unter gleichzeitiger Abnahme des Freiwinkels von der Spitze bis zum Außenbereich eingestellt werden.

Um einen gleichmäßigen Schneidvorgang zu gewährleisten, wird vorgeschlagen, daß die Abnahme des Hauptfreiwinkels stetig erfolgt. Auf diese Weise entstehen entlang der Hauptschneide keine Spannungsspitzen, die die Wahrscheinlichkeit eines vorzeitigen Versagens der Hauptschneide an dieser Stelle erhöhen.

Um einen von der Hauptschneide abgesetzten Spitzenbereich zu erhalten, wird vorgeschlagen, daß die Abnahme des Hauptfreiwinkels in einer bestimmten Entfernung von der Bohrspitze beginnt. Dadurch entsteht ein Spitzenbereich, der entlang der Hauptschneide eine gewünschte Breite aufweist. Die Breite des Bereiches kann durch den Beginn der Abnahme des Hauptfreiwinkels festgelegt und variiert werden. Mit diesem Bereich senkt sich der Bohrkopf zuerst in das Material und bewirkt eine Zentrierung des Bohrers.

Um die Führung des Bohrers im Bohrloch zu verbessern, wird vorgeschlagen, daß die Hauptfreifläche mit einem in einer Distanz von der Bohrspitze geänderten Winkel der Hauptschneide in eine kegelige Übergangsfläche zwischen der Hauptfreifläche und einer Schmalseitenfläche übergeht. Dies ermöglicht eine insbesondere bei sehr harten Materialien wie beispielsweise Beton dringend erwünschte, sichere Führung des Bohrers und vermindert die Gefahr des Verrutschens im Sinne von Polygonloch-Bildung, was zu übermäßig großen Bohrlöchern oder sogar Verletzungen führen kann. Durch die vorgeschlagene Vorrichtung wird die Standzeit des Bohrers wesentlich erhöht, da ein Verschleiß in diesem Bereich der Kante vermieden werden kann.

Um eine zuverlässige Zentrierung durch die Zentrierspitze zu gewährleisten und die zur Vorschubbewegung nötige Kraft zu verringern, wird vorgeschlagen, daß die Bohrspitze einen Spitzenwinkel aufweist, der kleiner ist als der Winkel der Hauptschneiden in der Nähe der Übergangsfläche. Bei gleicher Kraftanwendung erreicht man durch diese Maßnahme, daß die Spitze besser in die Bearbeitungsfläche eindringt und gleichzeitig eine Zentrierfunktion wahrnimmt, bevor die Hauptschneiden an der Bearbeitungsfläche angreifen.

Eine weitere Verbesserung der Zentrierspitze wird dadurch erreicht, daß die Hauptfreifläche mit je einer Auskehlung in die Bohrspitze übergeht. Dieser langsame Übergang der Hauptfreiflächen in die Bohrspitze gewährleistet, daß die Gefahr eines Plattenbruchs vermindert wird und der Einsatz von härteren Platten möglich ist. Hierdurch können selbst Beton- oder Metallbearbeitungsflächen bei Erreichung von hohen Standzeiten durchbohrt werden. Durch die Zentrierspitze erhält man eine kleinere Fläche im Kernbereich, dem Bohrlochzentrum. Hierdurch wird bei gleicher angreifender Kraft ein verbesserter Bohrfortschritt gewährleistet. Durch die Zentrierspitze ist die Gefahr des Verlaufens beim Anbohren vermindert und eine zusätzliche Führung gegeben. Hierdurch wird ebenfalls die Entstehung von Polygonlöchern vermieden.

Um die Reibung beim Bohren zu verhindern, wird vorgeschlagen, daß die Schmalseitenfläche einen Außenradius aufweist, an den sich eine sich mit wachsendem Abstand von einer Außenkante verbreiternde, in Schnittrichtung nachgeordnete Abflachung anschließt. Durch das schräge Wegnehmen des Radius erhält man im oberen Bereich in der Nähe der Außenkante zwischen Hauptfreifläche und Seitenschmalfläche eine gute Führung innerhalb des Bohrlochs, die im unteren Bereich nicht mehr nötig ist. Dort wird die Reibungsfläche zunehmend verringert. Dies erleichtert die Schnittbewegung und verringert die zu einem Bohrlochfortschnitt nötige Kraft. Gleichzeitig wird das Schneidplattenmaterial durch die verminderte Reibung beim Bohren nicht unnötigerweise hohen Temperaturen ausgesetzt, was wiederum den Verschleiß das Materials aufgrund von Diffusion oder anderer Materialschwächung herabsetzt.

Die Erfindung wird anhand des in der Zeichnung dargestellten Ausführungsbeispiels näher erläutert. Es zeigen:
- Fig.1a: einen Bohrer mit einer Hartmetallschneidplatte,
- Fig.1b: eine Hartmetallschneidplatte in Ansicht auf die Seitengroßfläche,
- Fig.1c: einen Schnitt durch Fig.1b entlang der Linie A1-A2,
- Fig.2: eine Seitenansicht der Hartmetallschneidplatte auf die Schmalseite und
- Fig.3: eine perspektivische Ansicht der Hartmetallschneidplatte.

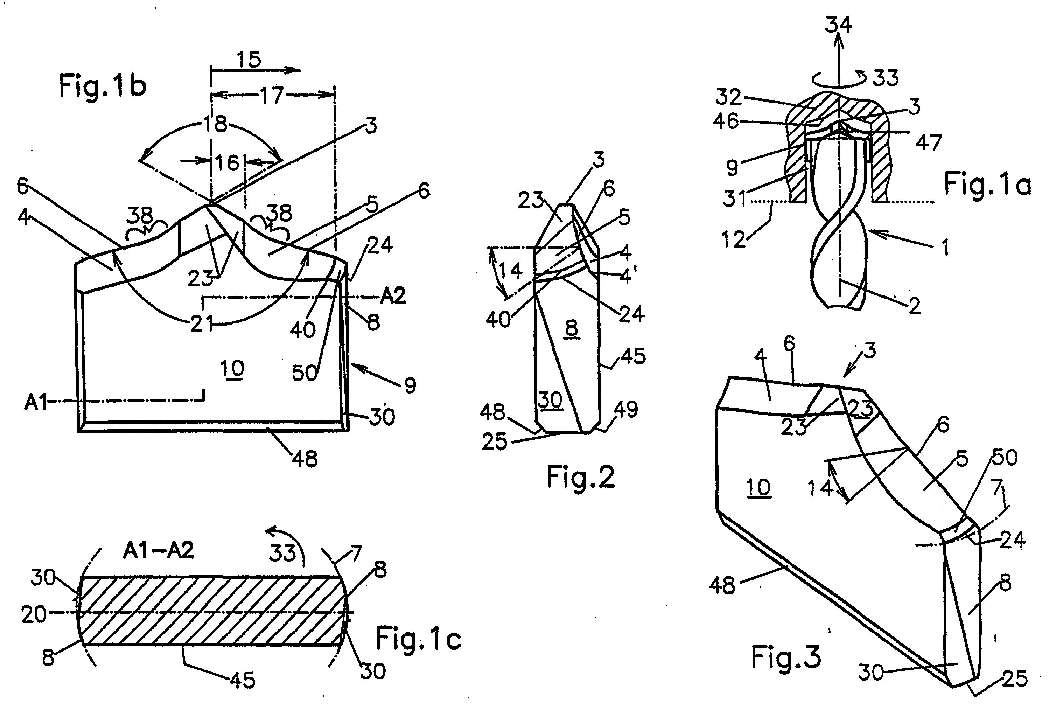

In Fig.1a ist schematisch ein prinzipieller Aufbau eines Bohrers 1 mit aufgesetzter Hartmetallschneidplatte dargestellt. Bei dem Bohrer 1 handelt es sich vorzugsweise um einen Hammer- oder Schlagbohrer. Der Bohrer 1 ist in einem Werkstückbohrloch 31 innerhalb eines zu bearbeitenden Werkstücks 32 dargestellt. Der Bohrer 1 weist eine Spiralform auf, die den Abtransport von herausgearbeitetem Material aus dem Werkstückbohrloch 31 erleichtert. Die Hartmetallschneidplatte weist eine Bohrspitze 3 auf, durch die die Drehachse 2 des Bohrers 1 verläuft. Die Hartmetallschneidplatte ragt an der Bohrerspitze 3 über das Ende 47 des Bohrers 1 und an ihren Schmalseiten 9 über den Außendurchmesser des Bohrers 1 hinaus. Die Vorschubbewegung 34 des Bohrers 1 verläuft in Längsrichtung der Drehachse 2 des Bohrers 1. Die Schnittbewegung 33 des Bohrers 1 verläuft senkrecht zur Vorschubbewegung 34. Die Schnittbewegung 33 und die Vorschubbewegung 34 wird deshalb im wesentlichen von der Hartmetallschneidplatte getragen. Die an der Hartmetallschneidplatte anliegende, bearbeitete Fläche 46 des Werkstücks 32 weist eine Querschnittsform auf, die dem Profil der Hartmetallschneidplatte entspricht.

Fig.1b zeigt eine vergrößerte Darstellung der Hartmetallschneidplatte. Die Hartmetallschneidplatte weist an der Bohrspitze 3 beidseitig abfallende, von jeweils einer Hauptspanfläche 4 und einer Hauptfreifläche 5 gebildete Hauptschneiden 6 auf. Der Schaft 10 ist in seiner Querrichtung 20 von Schmalseiten 9 begrenzt, die Schmalseitenflächen 8 und Freiflächen 30 aufweisen. Die Schmalseitenflächen 8 sind mit einem Außenradius 7 ausgebildet, während die Freiflächen 30 eben sind. Die Hauptfreiflächen 5 gehen jeweils mit einer Auskehlung 38 in die Bohrspitze 3 über. Infolgedessen ist die Hauptschneide 6 hier steiler und die für einen zügigen Vortrieb erforderlichen Axialkräfte können kleiner sein.

Die Hauptfreifläche 5 bildet zumindest an der Hauptschneide 6 einen in Fig.2 verdeutlichten Hauptfreiwinkel 14 mit der in Fig.1a dargestellten, zur Drehachse senkrechten Ebene 12. Dieser in Fig.2 dargestellte Hauptfreiwinkel 14 nimmt mit zunehmendem Abstand 15 von der Bohrspitze 3 ab. Im Abstand 16 ist der dargestellte Hauptfreiwinkel 14 größer, als in der Distanz 17. Die Reduzierung des Hauptfreiwinkels 14 erfolgt z.B. von 35° auf 10° bzw. 15°. Vorzugsweise erfolgt die Abnahme des Hauptfreiwinkels 14 stetig. Dies bedeutet, daß keine sprunghaften Änderungen des Hauptfreiwinkels 14 auftreten, an denen sich z.B. Spannungsspitzen beim Bohren ausbilden könnten. Neben der Abnahme des Hauptfreiwinkels 14 ab der bestimmten Entfernung 16 von der Bohrspitze 3 erfolgt eine Änderung des Winkels 21, den die Hauptschneiden 6 zueinander bilden. Der Winkel 21 ändert sich mit zunehmendem Abstand 15 von der Bohrspitze 3, bis er radial außen an den Hauptschneiden 6 eine Größe von 150° erreicht. Die Größe des Winkels 21 zwischen den Hauptschneiden 6 ändert sich dann ab der Distanz 17 auf 120°. Der an der Bohrspitze 3 gebildete Spitzenwinkel 18 ist ebenfalls beispielsweise 120°. Andererseits ist es auch möglich, die Hauptschneiden 6 insgesamt mit einem Winkel 21 von 120° bis zu 150° zu versehen und gleichzeitig den Hauptfreiwinkel 14 zu reduzieren. Durch die erhöhte Hinterstützung der Hauptschneide 6 beim Schneidvorgang bzw. durch die Materialanhäufung bei abnehmendem Hauptfreiwinkel ist die Gefahr eines Plattenbruches und des frühzeitigen Verschleißes reduziert und der Einsatz von härteren und oft spröderen Hartmetallschneidplatten möglich.

In einer Distanz 17 ist die Hauptfreifläche 5 von einer Kante 40 begrenzt, d.h. die Hauptfreifläche 5 geht in eine Übergangsfläche 50 über. Daran und an einen Kantenabschnitt 4' schließt sich die Schmalseitenfläche 8 an, die mit einem Radius 7 gewölbt ist. Dieses wird insbesondere durch den Schnitt A1-A2 verdeutlicht, der in Fig.1c dargestellt ist.

Fig.1c zeigt den Schnitt A1-A2 durch die Hartmetallschneidplatte aus Fig.1b. Die Längsachse 20 verläuft entlang der Hartmetallschneidplatte. Der Schnitt A1-A2 verläuft durch den Schaft 10 der Hartmetallschneidplatte von einer Schmalseite 9 zur anderen Schmalseite 9. Die Schmalseiten 9 weisen neben der mit einem Radius 7 gekrümmten Schmalseitenfläche 8 eine ebene Fläche 30 auf. Die Trennung zwischen der Freifläche 30 und der Schmalseitenfläche 8 verläuft praktisch diagonal an der Schmalseite 9. Deshalb ist am unteren Ende der Schmalseite 9 bei dem Schnitt bei A1 ein größerer Anteil der Freifläche 30 zu sehen, als bei dem in der Nähe der Kante 24 angelegten Schnitt bei A2 auf der anderen Schmalseite 9. Der höher gelegene Schnitt bei A2 zeigt im wesentlichen einen Schnitt durch die gekrümmte Schmalseitenfläche 8 und nur einen sehr geringen Teil der Freifläche 30. Die Schmalseitenfläche 8 ist jeweils bezüglich der Schnittbewegung 33 die vordere Fläche, die das Werkstück 32 streift. Durch die schräge Trennung der Flächen 30 und 8 ist einerseits eine sichere Führung des Bohrers 1 im Bohrloch 31 in der Nähe der oberen Kante 24 der Schmalseite 9 gewährleistet und gleichzeitig die Reibung der Schmalseite 9 an der Wand des Bohrlochs 31 minimiert.

Fig.2 zeigt in der Seitenansicht eine Hartmetallschneidplatte mit Ansicht der Schmalfläche 9. Die Hauptschneide 6 ist begrenzt von der Hauptspanfläche 4 und der Hauptfreifläche 5. Der Hauptfreiwinkel 14 der Hauptfreifläche 5 entlang der Hauptschneide 6 verringert sich beim Übergang von der Spitzenfläche 23 bis zur Kante 40. An der unteren Kante 25 der Schmalseite 9 sind die dazu senkrecht verlaufenden Kanten in einem Winkel von 45° angefast, wobei die daraus entstehenden Flächen 48, 49, die in Fig.3 noch einmal perspektivisch dargestellt sind, aufeinander zulaufen. Diese Form erleichtert das Einsetzen der Hartmetallschneidplatte in den Bohrer 1.

Fig.3 zeigt eine perspektivische Darstellung der Hartmetallschneidplatte. Es ergibt sich eine schräge Aufsicht auf die Übergangsfläche 50, mit der die Hauptfreifläche 5 in die Schmalseitenfläche 8 übergeht. Es ist deutlich ersichtlich, daß die Übergangsfläche von einander parallelen, mit Radien versehenen Kanten 40, 24 begrenzt werden, so daß sich eine schief kegelige bzw. kegelmantelabschnittartige Form der Übergangsfläche 50 ergibt. Diese schief angeordnete, kegelige Übergangsfläche 50 ist in Bezug auf die Hauptfreifläche 5 eine Nebenfreifläche.

## Patentansprüche

1. Hartmetallschneidplatte für den Einsatz an einem Bohrer (1), insbesondere an einem Stein- oder Betonbohrer, die eine durch die Drehachse (2) des Bohrers (1) verlaufende Bohrspitze (3), beidseitig abfallende von jeweils einer Hauptspanfläche (4) und einer Hauptfreifläche (5) gebildete Hauptschneiden (6) besitzt, wobei die Hauptfreifläche (5) an der Hauptschneide (6) einen Hauptfreiwinkel (14) mit einer zur Drehachse (2) senkrechten Ebene (12) bildet, **dadurch gekennzeichnet, daß** der an der Hauptschneide (6) gebildete Hauptfreiwinkel (14) mit zunehmendem Abstand (15) von der Bohrspitze (3) abnimmt.

2. Hartmetallschneidplatte nach Anspruch 1, **dadurch gekennzeichnet, daß** die Abnahme des Hauptfreiwinkels (14) stetig erfolgt.

3. Hartmetallschneidplatte nach Anspruch 1 oder 2, **dadurch gekennzeichnet, daß** die Abnahme des Hauptfreiwinkels (14) in einer bestimmten Entfernung (16) von der Bohrspitze (3) beginnt.

4. Hartmetallschneidplatte nach einem oder mehreren der Ansprüche 1 bis 3, **dadurch gekennzeichnet, daß** die Hauptfreifläche (5) mit einem in einer Distanz (17) von der Bohrspitze (3) geänderten Winkel (21) der Hauptschneide (6) in eine kegelige Übergangsfläche (50) zwischen der Hauptfreifläche (5) und einer Schmalseitenfläche (8) übergeht.

5. Hartmetallschneidplatte nach einem oder mehreren der Ansprüche 1 bis 4, **dadurch gekennzeichnet, daß** die Bohrspitze (3) einen Spitzenwinkel (18) aufweist, der kleiner ist, als der Winkel (21) der Hauptschneiden (6) in der Nähe der Übergangsfläche (50).

6. Hartmetallschneidplatte nach einem oder mehreren der Ansprüche 1 bis 5, **dadurch gekennzeichnet, daß** die Hauptfreiflächen (5) mit je einer Auskehlung (38) in die Bohrspitze (3) übergehen.

7. Hartmetallschneidplatte nach einem oder mehreren der Ansprüche 1 bis 6, **dadurch gekennzeichnet, daß** die Schmalseitenfläche (8) einen Außenradius (7) aufweist, an den sich eine sich mit wachsendem Abstand von einer Außenkante (24) verbreiternde, in Richtung der Schnittbewegung (33) nachgeordnete Freifläche (30) anschließt.

## Claims

1. Hard metal cutting plate for use on a drill (1) especially on a rock drill or concrete drill, which cutting plate comprises a drilling tip (3), which extends through the axis of rotation (2) of the drill (1), and has major cutting edges (6) which slope downwards on both sides and which are respectively formed by a major cutting face (4) and a major flank (5), wherein the major flank (5) on the major cutting edge (6) forms a main clearance angle (14) with a plane (12) perpendicular to the axis of rotation (2), **characterised in that** the main clearance angle (14) formed on the major cutting edge (6) decreases as the spacing (15) from the drilling tip (3) increases.

2. Hard metal cutting plate as claimed in Claim 1, **characterised in that** the main clearance angle (14) decreases steadily.

3. Hard metal cutting plate as claimed in Claim 1 or 2, **characterised in that** the main clearance angle (14) begins to decrease at a specific distance (16) from the drilling tip (3).

4. Hard metal cutting plate as claimed in one or more of Claims 1 to 3, **characterised in that** the major flank (5), having an angle (21) of the major cutting edge (6) which varies at a distance (17) from the drilling tip (3), changes into a conical transitional surface (50) between the major flank (5) and a narrow side surface (8).

5. Hard metal cutting plate as claimed in one or more of Claims 1 to 4, **characterised in that** the drilling tip (3) comprises a tip angle (18) which is smaller than the angle (21) of the major cutting edge (6) in proximity to the transitional surface (50).

6. Hard metal cutting plate as claimed in one or more of Claims 1 to 5, **characterised in that** the major flank (5) changes with every channel (38) into the drilling tip (3).

7. Hard metal cutting plate as claimed in one or more of Claims 1 to 6, **characterised in that** the narrow side surface (8) comprises an outer radius (7) to which a flank (30) is joined which widens as the spacing increases from an outer edge (24) and which is disposed downstream in the direction of the cutting motion (33).

## Revendications

1. Plaquette de coupe en métal dur à utiliser sur un foret (1), en particulier un foret pour pierre ou béton, qui comporte une pointe de foret (3) qui traverse l'axe de rotation (2) du foret (1), et des lames principales (6) qui sont inclinées des deux côtés et qui sont définies par une face de coupe principale (4) et une face de dépouille principale (5), la face de dépouille principale (5) définissant sur la lame principale (6) un angle de dépouille principal (14) avec un plan (12) perpendiculaire à l'axe de rotation (2), **caractérisée en ce que** l'angle de dépouille principal (14) défini sur la lame principale (6) diminue en même temps que la distance (15) par rapport à la pointe de foret (3) augmente.

2. Plaquette de coupe en métal dur selon la revendication 1, **caractérisée en ce que** la diminution de l'angle de dépouille principal (14) est régulière.

3. Plaquette de coupe en métal dur selon la revendication 1 ou 2, **caractérisée en ce que** la diminution de l'angle de dépouille (14) commence à une distance définie (16) de la pointe de foret (3).

4. Plaquette de coupe en métal dur selon l'une au moins des revendications 1 à 3, **caractérisée en ce que** la face de dépouille principale (5) se prolonge, avec un angle (21) de la lame principale (6) modifié à une distance (17) de la pointe de foret (3), par une surface de transition conique (50) entre ladite face de dépouille principale (5) et une face de chant (8).

5. Plaquette de coupe en métal dur selon l'une au moins des revendications 1 à 4, **caractérisée en ce que** la pointe de foret (3) présente un angle de pointe (18) qui est plus petit que l'angle (21) des lames principales (6) près de la surface de transition (50).

6. Plaquette de coupe en métal dur selon l'une au moins des revendications 1 à 5, **caractérisée en ce que** les faces de dépouille principales (5) se prolongent avec une gorge (38) par la pointe de foret (3).

7. Plaquette de coupe en métal dur selon l'une au moins des revendications 1 à 6, **caractérisée en ce que** la face de chant (8) présente un rayon extérieur (7) auquel fait suite une face de dépouille (30) qui s'élargit en même temps que la distance par rapport à un bord extérieur (24) augmente et qui est disposé en aval dans le sens du mouvement de coupe (33).
